# EUROPEAN PATENT APPLICATION

(11) **EP 4 836 537 A1**
(43) Date of publication of application: **04.11.2026**
(21) Application number: 24916763.6
(22) Date of filing: 27.12.2024
(51) Int. Cl.: H04W 52/02

(54) **DEVICE ENERGY-SAVING METHOD AND SYSTEM, ELECTRONIC DEVICE, AND STORAGE MEDIUM**

(30) Priority: 09.01.2024 CN 202410031239
(71) Applicant: ZTE Corporation, Shenzhen, Guangdong 518057 (CN)
(72) Inventor: HE, Li, Shenzhen, Guangdong 518057 (CN); WANG, Ningcheng, Shenzhen, Guangdong 518057 (CN); YANG, Jianbo, Shenzhen, Guangdong 518057 (CN); XIE, Cheng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/143142
(87) International publication number: WO 2025/148716

(57) **Abstract**

Provided in the embodiments of the present disclosure are a device energy-saving method and system, an electronic device, and a storage medium. The method comprises: acquiring a network state diagram sequence, wherein the network state diagram sequence comprises network state diagrams of a network device at a plurality of moments, the network state diagrams at the plurality of moments being used for representing a network topology structure of the network device at the plurality of moments, and the plurality of moments comprising the current moment; on the basis of the network state diagram sequence, determining a first energy-saving risk value of the network device, wherein the first energy-saving risk value is used for representing the risk degree of energy saving of the network device under the network topology structure at the current moment; and sending the first energy-saving risk value to the network device.

## Description

The present disclosure claims priority to Chinese Patent Application No. 202410031239.9, filed on January 9, 2024, the entire contents of which are incorporated herein by reference.

### TECHNICAL FIELD

The present disclosure relates to the technical field of communications, and in particular, to a device energy-saving method and system, an electronic device, and a storage medium.

### BACKGROUND

Currently, energy consumption of network devices accounts for a large proportion of operators' expenses. Under the requirements of the dual carbon policy for energy conservation and emission reduction, operators have clearly proposed the demand for reducing power consumption of network devices. Performing energy-saving operations on network devices is often accompanied by certain energy-saving risks. Slight energy-saving risks may lead to a decrease in the processing performance of network devices, and severe energy-saving risks may cause interruption of network services. Therefore, it is necessary to determine a relatively accurate energy-saving policy to balance the relationship between energy-saving benefits and energy-saving risks of network devices.

### SUMMARY

In a first aspect, a device energy-saving method is provided in the embodiments of the present disclosure, the method is applied to a management device. The management device is connected to a network device. The method includes:
acquiring a network state graph sequence, where the network state graph sequence includes network state graphs of the network device at a plurality of moments, the network state graphs at the plurality of moments are used to characterize network topology structures of the network device at the plurality of moments, where the plurality of moments include a current moment; determining a first energy-saving risk value of the network device based on the network state graph sequence, where the first energy-saving risk value is used to characterize a risk degree of performing energy-saving on the network device under a network topology structure at the current moment; and sending the first energy-saving risk value to the network device.

In a second aspect, a device energy-saving method is provided in the embodiments of the present disclosure, the method is applied to a network device. The network device is connected to a management device. The method includes:
receiving a first energy-saving risk value sent from the management device, where the first energy-saving risk value is used to characterize a risk degree of performing energy-saving on the network device under a network topology structure at a current moment; determining an energy-saving policy based on an operation state of the network device and the first energy-saving risk value; and performing an energy-saving operation on the network device based on the energy-saving policy and load prediction information of the network device.

In a third aspect, a device energy-saving apparatus is provided in the embodiments of the present disclosure, and the apparatus is applied to a management device. The apparatus includes: an acquisition unit, a processing unit, and a sending unit.

The acquisition unit is configured to acquire a network state graph sequence, where the network state graph sequence includes network state graphs of the network device at a plurality of moments, the network state graphs at the plurality of moments are used to characterize network topology structures of the network device at the plurality of moments, where the plurality of moments include a current moment.

The processing unit is configured to determine a first energy-saving risk value of the network device based on the network state graph sequence, where the first energy-saving risk value is used to characterize a risk degree of performing energy-saving on the network device under a network topology structure at the current moment.

The sending unit is configured to send the first energy-saving risk value to the network device.

In a fourth aspect, a device energy-saving apparatus is provided in the embodiments of the present disclosure, and the apparatus is applied to a network device. The apparatus includes a communication unit and a processing unit.

The communication unit is configured to receive a first energy-saving risk value sent from the management device, where the first energy-saving risk value is used to characterize a risk degree of performing energy-saving on the network device under a network topology structure at a current moment.

The processing unit is configured to determine an energy-saving policy based on an operation state of the network device and the first energy-saving risk value.

The processing unit is further configured to perform an energy-saving operation on the network device based on the energy-saving policy and load prediction information of the network device.

In a fifth aspect, a device energy-saving system is provided in the embodiments of the present disclosure, the system includes a management device and a network device, where the management device is configured to perform the device energy-saving method provided in the first aspect above, and the network device is configured to perform the device energy-saving method provided in the second aspect above.

In a sixth aspect, an electronic device is provided in the embodiments of the present disclosure, including: a memory and one or more processors, where the memory stores instructions executable for the one or more processors; and the one or more processors, upon executing the instructions, enable the electronic device to implement the device energy-saving method provided in any one of the first aspect or the second aspect above.

In a seventh aspect, a computer-readable storage medium is provided in the embodiments of the present disclosure, where the computer-readable storage medium stores computer instructions, and upon the computer instructions running on a computer, the computer is caused to perform the device energy-saving method provided in any one of the first aspect or the second aspect.

In an eighth aspect, a computer program product including computer instructions is provided in the embodiments of the present disclosure, upon the computer instructions running on a computer, the computer is caused to perform the device energy-saving method provided in any one of the first aspect or the second aspect.

### BRIEF DESCRIPTION OF THE DRAWINGS

The accompanying drawings are used to provide a further understanding of technical solutions of the present disclosure, and are constituted as a part of the specification. The accompanying drawings are used to explain the technical solutions of the present disclosure together with the embodiments of the present disclosure, but do not constitute a limitation on the technical solutions of the present disclosure.
FIG. 1 is a schematic diagram of composition of a device energy-saving system according to some embodiments of the present disclosure;
FIG. 2 is a flowchart of a device energy-saving method according to some embodiments of the present disclosure;
FIG. 3 is a flowchart of another device energy-saving method according to some embodiments of the present disclosure;
FIG. 4 is a flowchart of another device energy-saving method according to some embodiments of the present disclosure;
FIG. 5 is a schematic diagram of composition of a management device and a network device according to some embodiments of the present disclosure;
FIG. 6 is a block diagram of a device energy-saving apparatus according to some embodiments of the present disclosure;
FIG. 7 is a block diagram of another device energy-saving apparatus according to some embodiments of the present disclosure; and
FIG. 8 is a block diagram of an electronic device according to some embodiments of the present disclosure.

### DETAILED DESCRIPTION

The technical solutions in embodiments of the present disclosure will be described clearly and completely with combination of the accompanying drawings in the embodiments of the present disclosure below. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

Unless otherwise required by the context, throughout the specification and claims, a term "comprise" or "include" and variations thereof (such as a third person singular form, "comprises" or "includes" and a present participle form "comprising" or "including") is interpreted as open and inclusive, which means "include, but not limited to."In the description of the specification, terms "one/an embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics may be included in any one or more embodiments or examples in any suitable manner.

Expressions such as "first" and "second" are used for descriptive purposes only, and are not to be understood as indicating or implying a relative importance or implicitly indicating a number of indicated technical features. Thus, features limited with the expressions such as "first" or "second" may explicitly or implicitly include one or more of the features. In the description of the present disclosure, unless otherwise specified, wordings "multiple", "a plurality of" or "the plurality of" mean a number of two or more than two.

In the embodiments of the present disclosure, wordings such as "exemplarily" or "for example" and variations thereof are used to represent examples, instances, or illustrations. Any embodiment or design solution described in the embodiments of the present disclosure with wordings such as "exemplary/exemplarily" or "for example" should not be illustrated as being more preferred or advantageous over other embodiments or design solutions. Specifically, the usage of wordings such as "exemplary/exemplarily" or "for example" is intended to present relevant concepts in a concrete way.

In addition, the usage of the phrase "based on" is meant to be open and inclusive, since a process, step, calculation or other actions that are "based on" one or more of the described conditions or values may, in practice, be based on additional conditions or exceed those described values.

Currently, schemes and problems for an energy-saving method for a network device are as follows:
(1) Manual selection of an energy-saving policy for a network device by operation and maintenance personnel imposes high requirements on the personnel and lacks comprehensive energy-saving risk assessment. A network device at an important network position may be affected by an aggressive energy-saving policy, leading to poor controllability.
(2) A network device uses a fixed energy-saving policy. Since the service configuration and service load condition of a network device change over time, if the network device uses a fixed energy-saving policy without real-time adjustment, the energy-saving policy cannot match the service configuration and service load condition of the network device, resulting in poor flexibility and poor energy-saving effect of the network device.
(3) Operation and maintenance personnel often select a relatively conservative energy-saving policy to avoid possible energy-saving risks caused by an energy-saving operation, which prevents the energy-saving effect of the network device from meeting expectations, resulting in a poor energy-saving effect.

In summary, the energy-saving policy determined by current energy-saving methods has low accuracy and cannot effectively balance the relationship between energy-saving benefits and energy-saving risks for a network device, resulting in a poor energy-saving effect of the network device. How to improve the energy-saving effect for a network device is an urgent problem to be solved.

Based on this, a device energy-saving method and system, an electronic device, and a storage medium are provided in the embodiments of the present disclosure. The device energy-saving method includes: determining, by a management device, based on network state graphs of a network device at a plurality of moments including a current moment (i.e., a network state graph sequence), a risk degree of performing energy-saving on the network device under a network topology structure at the current moment (i.e., a first energy-saving risk value). In this way, the accuracy of determining the first energy-saving risk value is improved, thereby helping to improve the energy-saving effect of the network device.

The technical solutions of the present disclosure will be described below with reference to the accompanying drawings.

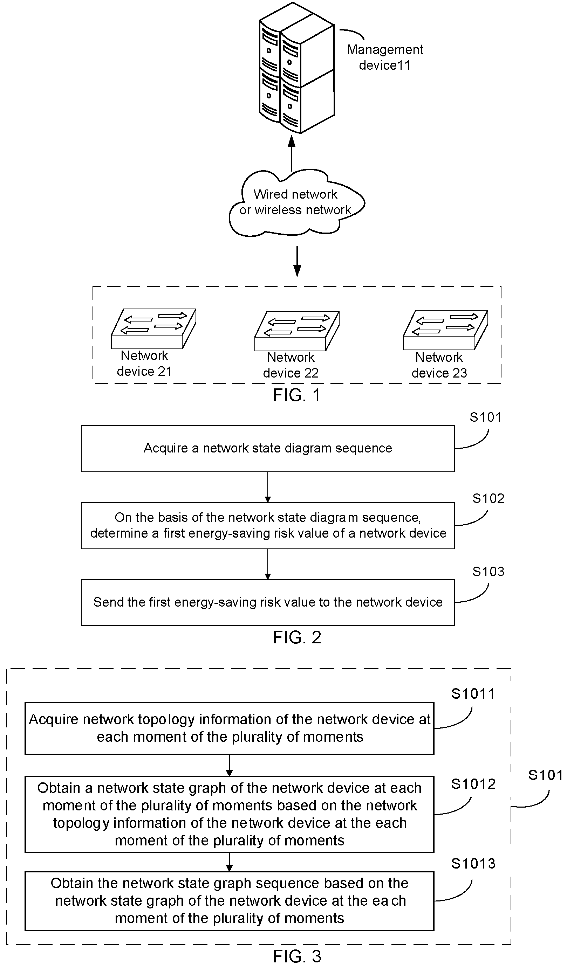

FIG. 1 is a schematic diagram of composition of a device energy-saving system according to some embodiments of the present disclosure. Referring to FIG. 1, the device energy-saving system includes a management device 11 and at least one network device (for example, a network device 21, a network device 22, and a network device 23).

Herein, the management device 11 is connected to each network device of the at least one network device. The connection may be a wired network connection or a wireless network connection, which is not limited in the embodiments of the present disclosure.

In some embodiments, in a case where the at least one network device includes a plurality of network devices, at least two network devices among the plurality of network devices may also be connected through a wired network or a wireless network.

In some embodiments, the management device 11 may be an independent physical device, for example, may be an electronic device having a computing processing function such as a server or a computer. Herein, the server may be a single server, or may be a server cluster composed of a plurality of servers. In some embodiments, the server cluster may also be a distributed cluster. In some embodiments, the server may also be implemented on a cloud platform, that is, the server may also be a cloud server. For example, the cloud server may include a private cloud, a public cloud, a hybrid cloud, a community cloud, a distributed cloud, an inter-cloud, a multi-cloud, or any combination thereof.

In some embodiments, the management device 11 may also be integrated with one network device of the at least one network device. That is, functions of the management device 11 and functions of the one network device of the at least one network device or the network device may be integrated on the same physical device. For example, the management device 11 may be integrated with the network device 21, which is not limited in the embodiments of the present disclosure.

In some embodiments, for each network device of the at least one network device, the network device is a physical entity connected to a network. There are various types of network devices, which are increasing day by day. The network devices may include: a hub, a switch, a bridge, a router, a gateway, a packet transport network (PTN) device, a slicing packet network (SPN) device, a network interface card (NIC), a wireless access point (AP), a modem, a fiber optic transceiver, or the like. The network devices may also have other names, such as a network element, a network element device, a communication device, etc., which are not limited in the embodiments of the present disclosure.

In some embodiments, the management device 11 is configured to acquire a network state graph sequence, determine a first energy-saving risk value of a network device based on the network state graph sequence, and then send the first energy-saving risk value of the network device to the network device. The network device may be any network device of the at least one network device.

In some embodiments, for any network device of the at least one network device, the network device is configured to receive the first energy-saving risk value sent from the management device, determine an energy-saving policy based on an operation state of the network device and the first energy-saving risk value, and then perform an energy-saving operation on the network device based on the energy-saving policy and load prediction information of the network device.

It should be understood that FIG. 1 is an exemplary structural diagram, and the number of devices included in the device energy-saving system shown in FIG. 1 is not limited. For example, the number of management devices and the number of network devices are not limited. Moreover, in addition to the devices shown in FIG. 1, the device energy-saving system shown in FIG. 1 may further include other devices, which is not limited in the embodiments of the present disclosure.

Next, as shown in FIG. 2, a device energy-saving method is provided in the embodiments of the present disclosure, and the method is applied to a management device. The management device may be the management device 11 shown in FIG. 1 above. The method may include S101 to S103.

In S101, a network state graph sequence is acquired.

In some embodiments, the management device, after enabling a device energy-saving function, performs the device energy-saving method provided in the embodiment of the present disclosure. Correspondingly, the management device, after disabling the device energy-saving function, does not perform or stops performing the device energy-saving method provided in the embodiment of the present disclosure.

In some embodiments, the management device enables the device energy-saving function by default or periodically.

In other embodiments, the management device determines to enable or disable the device energy-saving function according to an instruction of a user.

In some embodiments, after the management device enables the device energy-saving function, the management device acquires a network state graph sequence.

In other embodiments, after the management device receives an energy-saving instruction, the management device acquires the network state graph sequence in response to the energy-saving instruction. Herein, the energy-saving instruction may be delivered by a user, or sent from a network device, which is not limited in the embodiments of the present disclosure.

In still other embodiments, in a case where the management device detects that the network device needs to perform an energy-saving operation, the management device acquires the network state graph sequence. Herein, the management device detecting that the network device needs to perform an energy-saving operation may be that the management device determines that the network device needs to perform the energy-saving operation in a case where it is detected that energy consumption of the network device within a time unit is greater than or equal to an energy consumption threshold.

In some embodiments, the network state graph sequence includes network state graphs of the network device at a plurality of moments, and the network state graphs at the plurality of moments are used to characterize network topology structures of the network device at the plurality of moments. The network device may be any network device among at least one network device connected to the management device.

In some embodiments, as shown in FIG. 3, a step S101 may include steps S1011 to S1013.

In S1011, network topology information of the network device at each moment of the plurality of moments is acquired.

Herein, the plurality of moments may include a current moment and historical moments before the current moment. The current moment may be a moment upon the management device acquiring the network state graph sequence. It should be understood that the network topology information of the network device changes dynamically. It may not be possible to comprehensively assess an energy-saving risk of the network device based only on the network topology information of the network device at a single moment. Therefore, the plurality of moments may include the current moment and the historical moments, so as to more comprehensively assess the energy-saving risk of the network device. The network topology information of the network device at the current moment may be acquired by the management device at the current moment, and the network topology information of the network device at the historical moments may be acquired by the management device from a cache queue.

In some embodiments, the network topology information includes at least one of: a network level of the network device, a network topology structure of the network device, configuration information of the network device, or a link load condition. It can be understood that the device energy-saving system shown in FIG. 1 may include a plurality of network devices. A network level of a network device may be used to indicate a hierarchy at which the network device is located in the device energy-saving system; the network topology of the network device may be used to indicate connection relationships between the network devices in the device energy-saving system, which may be understood as how the plurality of network devices are connected together in the device energy-saving system; the configuration information of the network device indicates settings and parameters of the network device, and the configuration information of the network device may be used to configure and manage the network device to achieve normal operation of the network device; a link refers to a physical channel for connecting the network devices and carries a task of data transmission; and the link load condition is used to characterize a data processing capability and a data transmission efficiency of the link.

In some embodiments, the network topology information may further include an identifier of the network device and performance data of the network device. Herein, the performance data of the network device includes port service amount of the network device.

In S1012, a network state graph of the network device at each moment of the plurality of moments is obtained based on the network topology information of the network device at the each moment of the plurality of moments.

In some embodiments, after the management device obtains the network topology information of the network device at each moment of the plurality of moments, the management device may aggregate the network topology information of the network device at respective moments of the plurality of moments to simplify service connections between the network devices, thereby obtaining the network state graph of the network device at each moment of the plurality of moments. Herein, the network state graph at each moment represents static information of the network topology at that moment.

In step S1013, a network state graph sequence is obtained based on the network state graph of the network device at each moment of the plurality of moments.

In some embodiments, after the management device obtains the network state graph of the network device at each moment of the plurality of moments, the management device may aggregate the network state graphs of the network device at respective moments of the plurality of moments to obtain the network state graph sequence.

In some embodiments, taking the current moment among the plurality of moments as an example, a mathematical model construction process of the network state graph at the current moment is as follows:

For a current moment *t*, a feature vector v*^{t}* is composed according to network topology information of a network device v, and v*^{t}* serves as a node in the network state graph, representing a network state of the network device. Then, a feature vector ${e}_{\left(v,v′\right)}^{\left(t\right)}$ is composed according to bidirectional network topology information between the network devices, serving as an edge in the network state graph, representing a service connection between the network device v and a network device v'. The network device v' is a network device connected to the network device v in the device energy-saving system.

For the current time *t*, all network devices v^{(*t*)} at this moment *t* constitute the network device set V^{(*t*)}, and all edges ${e}_{\left(v,v′\right)}^{\left(t\right)}$ constitute the edge set E^{(*t*)}. Therefore, the network state graph at the current time can be represented as G^{(*t*)} = {V^{(*t*)}, E^{(*t*)}}.

Then, the management device may compose a network state graph sequence G^{(1:*T*)} based on the network state graph G^{(*t*)} at the current moment and the network state graphs at the previous (T-1) historical moments obtained from a cache queue. G^{(1:*T*)} represents T network state graphs of the network devices obtained by sampling the network topology information of the network devices at a time interval τ. A mathematical model construction process of the network state graphs at the previous (T-1) historical moments may refer to the mathematical model construction process of the network state graph at the current moment, which is not repeated in the embodiments of the present disclosure.

In S102, a first energy-saving risk value of a network device is determined based on the network state graph sequence.

Herein, the first energy-saving risk value of the network device is used to characterize a risk degree of performing energy-saving on the network device under a network topology structure at the current moment.

In some embodiments, an energy-saving risk prediction model based on a graph neural network algorithm is pre-stored in the management device. Determining the first energy-saving risk value of the network device based on the network state graph sequence may be: inputting the network state graph sequence into the energy-saving risk prediction model based on the graph neural network algorithm to obtain the first energy-saving risk value of the network device.

It should be understood that, after the network state graph sequence is input into the energy-saving risk prediction model based on the graph neural network algorithm, the energy-saving risk prediction model based on the graph neural network algorithm performs local information aggregation and time-varying information aggregation on the network state graph sequence, and then performs calculation and inference to obtain the first energy-saving risk value of the network device based on an attention mechanism.

Herein, local information aggregation refers to extracting network topology information of the network device v. That is, for the network state graph G^{(*t*)} at the current moment t, a message passing neural network is used to aggregate the network topology information of the network device v^{(*t*)} and network topology information of its neighbor network devices, to obtain a spatial feature vector ${h}_{v}^{\left(t\right)}$ representing the network device v^{(*t*)} at the current moment. Time-varying information aggregation refers to extracting a time-varying law of the network state graph sequence G^{(1:*T*)} as time passes. Because the network topology of the network device changes dynamically, it may not be possible to comprehensively evaluate the energy-saving risk of the network device based only on the network state graph of the network device at a certain moment. Therefore, it is necessary to comprehensively analyze the network state graphs of the network device at historical moments. After local information aggregation is performed on G^{(1:*T*)}, a spatial feature vector ${h}_{v}^{\left(1, T\right)}$ of the network device v may be obtained; then a recurrent processing unit is used to process ${h}_{v}^{\left(1, T\right)}$ to obtain a hidden matrix ${U}_{v}^{\left(1, T\right)}$; and then an attention mechanism is used to perform calculation on ${U}_{v}^{\left(1, T\right)}$ to obtain the first energy-saving risk value R1 of the network device.

Herein, a neighbor network device refers to another network device that is directly connected to a local device (such as a local computer, a server, a network switch, etc.) or is adjacent in the same local area network (LAN) or subnet.

In S103, the first energy-saving risk value is sent to the network device.

In some embodiments, after the management device obtains the first energy-saving risk value of the network device, the management device may send the first energy-saving risk value corresponding to the network device to the network device, so that the network device determines a relatively accurate energy-saving policy based on the corresponding first energy-saving risk value, thereby improving the energy-saving effect of the network device.

Based on the embodiment shown in FIG. 2, the first energy-saving risk value of the network device is used to characterize the risk degree of performing energy-saving on the network device under the network topology structure at the current moment, and the first energy-saving risk value of the network device is determined based on the network state graphs of the network device at the plurality of moments (i.e., the network state graph sequence). The network state graphs at the plurality of moments are used to characterize the network topology structures of the network device at the plurality of moments. That is, the risk degree of performing energy-saving on the network device under the network topology structure at the current moment (i.e., the first energy-saving risk value) is determined based on the network topology structures of the network device at the plurality of moments including the current moment. In this way, the accuracy of determining the first energy-saving risk value is improved, thereby helping to improve the energy-saving effect of the network device.

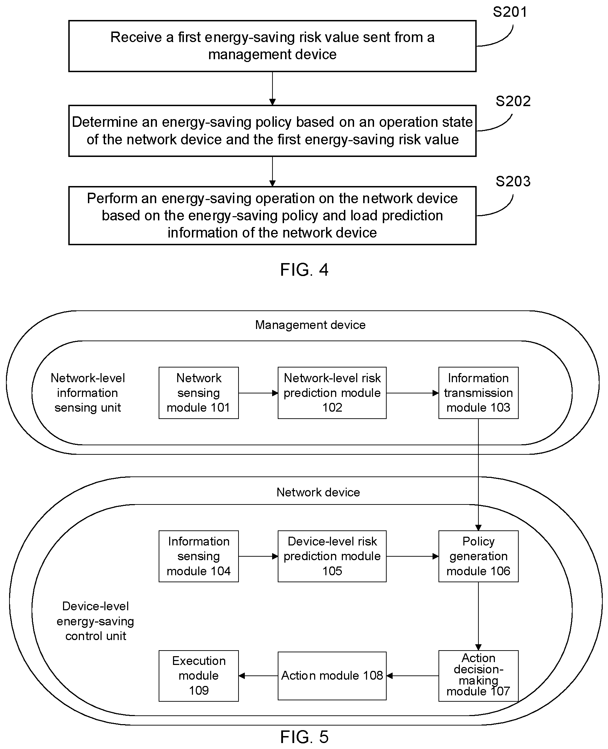

In some embodiments, as shown in FIG. 4, a device energy-saving method is further provided in the embodiments of the present disclosure, and the method is applied to a network device. The network device may be any one of the network devices shown in FIG. 1 above, for example, the network device may be a network device 21. The method may include steps S201 to S203.

In S201, a first energy-saving risk value sent from a management device is received.

Herein, the first energy-saving risk value is used to characterize a risk degree of performing energy-saving on the network device under a network topology structure at a current moment. The description of the first energy-saving risk value may refer to the corresponding description in the embodiments shown in FIG. 2 above, and details are not repeated herein in the embodiments of the present disclosure.

In S202, an energy-saving policy is determined based on an operation state of the network device and the first energy-saving risk value.

In some embodiments, determining the energy-saving policy based on the operation state of the network device and the first energy-saving risk value may be: determining a second energy-saving risk value of the network device based on the operation state of the network device, and then determining the energy-saving policy based on the first energy-saving risk value and the second energy-saving risk value. Herein, the second energy-saving risk value is used to characterize a risk degree of performing energy-saving on the network device under an operation state at the current moment.

It should be understood that the above first energy-saving risk value is determined by the management device based on the network state graph sequence, which may be understood as being determined by the management device based on overall conditions of the network devices in the device energy-saving system; and the second energy-saving risk value is determined by the network device based on the operation state of the network device. Therefore, the energy-saving policy determined based on the first energy-saving risk value and the second energy-saving risk value, i.e., comprehensively determining the energy-saving policy of the network device from two levels of the device energy-saving system (i.e., network level) and the network device (i.e., device level), improves the accuracy of determining the energy-saving policy, thereby effectively balancing the relationship between the energy-saving benefits and the energy-saving risks of the network device and improving the energy-saving effect of the network device.

In some embodiments, the operation state of the network device at least includes load information of a single board in the network device. Determining the second energy-saving risk value of the network device based on the operation state of the network device may be: obtaining an energy-saving risk value of the single board in the network device based on the load information of the single board in the network device and a time sequence prediction algorithm, and then obtaining the second energy-saving risk value of the network device based on the energy-saving risk value of the single board in the network device. Herein, the load information of the single board is used to characterize a service amount of the board. The load information of the single board may be obtained by the network device summarizing port service information of each port on the single board to obtain the load information of the single board.

Herein, the single board refers to a switching board that processes service distribution. One board includes a plurality of components. A component refers to an independent integrated chip in a circuit, and the component include but are not limited to a processor, a memory, and a forwarding chip. A plurality of chips and connecting components may form a module, and the module refers to a circuit system composed of a plurality of chips and connecting components that jointly complete related functions. Three granularities of the board, the chip, and the module may complement each other to achieve refined management.

In some embodiments, the time sequence prediction algorithm may include but is not limited to at least one of the following: a machine learning-based time sequence prediction algorithm or a neural network time sequence prediction algorithm.

In some embodiments, different time sequence prediction algorithms correspond to different weight coefficients or the same weight coefficient. Obtaining the energy-saving risk value of the single board in the network device based on the load information of the single board in the network device and the time sequence prediction algorithm may be that: the network device performs prediction based on the different time sequence prediction algorithms and the load information of the single board in the network device respectively to obtain a plurality of prediction results, then performs weighted average calculation on the plurality of prediction results in combination with the weight coefficients of the time sequence prediction algorithms corresponding to the respective prediction results, and then takes the result after the weighted average calculation as the energy-saving risk value of the single board in the network device.

In some embodiments, the network device includes one or more boards.

In some embodiments, in a case where the network device includes one board, after the energy-saving risk value of the board in the network device is obtained, the energy-saving risk value of the board in the network device may be taken as the second energy-saving risk value of the network device.

In other embodiments, in a case where the network device includes a plurality of boards, the management device may determine the second energy-saving risk value of the network device based on the energy-saving risk values of the plurality of boards. For example, the management device may determine a target board from the plurality of boards, and then determine an energy-saving risk value of the target board as the second energy-saving risk value of the network device. Herein, the target board may be a board with a maximum energy-saving risk value among the plurality of boards. For another example, the management device may determine an average value of the energy-saving risk values of the plurality of boards as the second energy-saving risk value of the network device.

In some embodiments, the operation state of the network device may further include device performance data and device component state information. Herein, the device performance data includes at least one of: port service amount information, a central processing unit (CPU) utilization rate, or a memory utilization rate. The device component state information includes at least one of: a board operating state, a chip operating state, a communication connection state between boards, or a performance indicator of a component, etc.

In some embodiments, the above time sequence prediction algorithm may be stored in an idle CPU of the network device, and the idle CPU of the network device may be determined by the management device based on the CPU utilization rate in the operation state of the network device.

In some embodiments, after obtaining the second energy-saving risk value of the network device, the network device may determine the energy-saving policy based on the second energy-saving risk value and the first energy-saving risk value.

In some embodiments, determining the energy-saving policy based on the second energy-saving risk value and the first energy-saving risk value may include steps X1 to X3.

In X1, weighted calculation is performed on the second energy-saving risk value and the first energy-saving risk value to obtain a third energy-saving risk value.

Herein, the third energy-saving risk value is used to represent a comprehensive risk degree of performing energy-saving on the network device under the network topology structure at the current moment and the operation state at the current moment. The third energy-saving risk value may also have other names, for example, a comprehensive risk index.

In X2, an energy-saving risk level of the network device is obtained based on the third energy-saving risk value and a first correspondence.

Herein, the first correspondence is used to characterize a correspondence between an energy-saving risk value and an energy-saving risk level.

In some embodiments, the first correspondence is pre-stored in the network device. After obtaining the third energy-saving risk value, the network device may determine, according to the third energy-saving risk value and the first correspondence, an energy-saving risk level corresponding to the third energy-saving risk value in the first correspondence, and then take the energy-saving risk level as the energy-saving risk level of the network device.

In some embodiments, there is a positive correlation between the third energy-saving risk value and the energy-saving risk level, that is, the energy-saving risk level increases as the third energy-saving risk value increases.

In some embodiments, after obtaining the third energy-saving risk value, the network device may also perform bucket calculation on the third energy-saving risk value, and use a result of the bucket calculation as the energy-saving risk level of the network device.

In X3, the energy-saving policy is determined according to the energy-saving risk level and a second correspondence.

Herein, the second correspondence is used to characterize a correspondence between an energy-saving risk level and an energy-saving policy.

In some embodiments, the second correspondence is pre-stored in the network device. After obtaining the energy-saving risk level of the network device, the network device may determine, according to the energy-saving risk level and the second correspondence, an energy-saving policy corresponding to the energy-saving risk level in the second correspondence.

In some embodiments, the second correspondence may also have other names, for example, a policy warehouse. Herein, the policy warehouse, i.e., the second correspondence, designs n-level energy-saving policies according to hierarchical adjustment of protection strategies and device resource adjustment granularities. As the protection reservation decreases and the hardware resource adjustment granularity increases, the energy-saving policy becomes more aggressive, and the energy-saving risks and energy-saving benefits brought by the energy-saving policy are also greater.

The above protection policy refers to reserving processing capability of network device resources to prevent situations such as protection switching and service path re-computation caused by network faults, which may lead to a surge in network traffic within a short period of time, exceeding the current bearable capability of the management device, thereby causing service damage. The protection policy includes three levels of protection: device active-standby protection reservation, device balancing redundancy reservation, and network-level maximum service load reservation. Active-standby protection reservation means that resources in the network device are divided into working active resources and standby resources for switching in emergencies. In a case where an abnormality occurs in the active resources, the network device may switch to the standby resources to continue working, so as to ensure normal operation of the network device. Device balancing redundancy reservation means that adjustable resources in the network device are load-balanced. For example, all ports on the same board share the same resources such as a processor and a memory. The device balancing redundancy reservation has a relatively large redundancy for a single port, and in a case where an abnormal increase in traffic occurs on a single port, the impact on the overall performance of the network device is small. Network-level maximum service load reservation means that the management device calculates, based on overall link states and service conditions of the device energy-saving system, a maximum load that may occur on the network device in the future, and performs load reservation for it in advance.

In S203, an energy-saving operation is performed on the network device based on the energy-saving policy and load prediction information of the network device.

In some embodiments, after determining the energy-saving policy based on the operation state of the network device and the first energy-saving risk value, the network device may determine an energy-saving operation based on the energy-saving policy and the load prediction information of the network device, and then perform the energy-saving operation on the network device.

Herein, the load prediction information of the network device may be obtained by the network device predicting based on load information of the network device at the current moment, or may be delivered by the management device, which is not limited in the embodiments of the present disclosure.

In some embodiments, the network device determining the energy-saving operation based on the energy-saving policy and the load prediction information of the network device, and then performing the energy-saving operation on the network device may be that: the network device determines, based on the energy-saving policy and the load prediction information of the network device, the numbers of boards, modules, and chips that are capable of meeting service processing requirements in the network device, then determines components that need to be energy-saved or to stop energy-saving in combination with energy-saving states of the components, then delivers an energy-saving instruction to the components that need to be energy-saved to indicate the components that need to be energy-saved to perform a power-off or sleep operation, and delivers a stop energy-saving instruction to the components that need to stop energy-saving to indicate the components that need to stop energy-saving to perform a power-on or wake-up operation. The corresponding components receive the energy-saving instruction or the stop energy-saving instruction, and perform operations corresponding to the energy-saving instruction or the stop energy-saving instruction. In this way, the energy-saving operation is performed on the network device.

In some embodiments, performing the energy-saving operation on the network device based on the energy-saving policy and the load prediction information of the network device may also be performing the energy-saving operation on the network device based on the energy-saving policy, the operation state of the network device, and the load prediction information of the network device. The description of the operation state of the network device, reference refer to the corresponding description in the above embodiments, and details are not repeated herein in the embodiment of the present disclosure. The description of how to perform the energy-saving operation on the network device based on the energy-saving policy, the operation state of the network device, and the load prediction information of the network device may refer to the above description of performing the energy-saving operation on the network device based on the energy-saving policy and the load prediction information of the network device, and details are not repeated herein in the embodiment of the present disclosure.

Based on the embodiments shown in FIG. 4, the network device determines the energy-saving policy based on the first energy-saving risk value sent from the management device and the operation state of the network device, that is, comprehensively determining the energy-saving policy of the network device from two levels of the device energy-saving system (i.e., network level) and the network device (i.e., device level), which improves the accuracy of determining the energy-saving policy, thereby effectively balancing the relationship between the energy-saving benefits and the energy-saving risks of the network device and improving the energy-saving effect of the network device.

Hereinafter, a flow of the device energy-saving method provided in the embodiments of the present disclosure is exemplified in combination with the structure of the management device and the structure of the network device.

FIG. 5 is a schematic diagram of composition of a management device and a network device according to some embodiments of the present disclosure. Referring to FIG. 5, the management device includes a network-level information sensing unit, and the network-level information sensing unit includes a network sensing module 101, a network-level risk prediction module 102, and an information transmission module 103.

Herein, the network-level information sensing unit is configured to sense and compute overall networking service load information of the device energy-saving system, and is used to sense an overall situation of the device energy-saving system, so as to provide network-level supplementary information for the network device to determine the energy-saving policy. The network sensing module 101 is configured to acquire network topology information of the network device at each moment of a plurality of moments; the network-level risk prediction module 102 is configured to obtain a network state graph sequence from the network topology information of the network device at each moment of the plurality of moments acquired by the network sensing 101, input the network state graph sequence into an energy-saving risk prediction model based on a graph neural network algorithm, and obtain the first energy-saving risk value of the network device through local information aggregation, time-varying information aggregation, and computational inference using an attention mechanism. The information transmission module 103 is a data transmission channel between the management device and the network device, and is configured for data interaction with the network device. For example, the information transmission module 103 delivers the first energy-saving risk value of the network device obtained by the network-level risk prediction module 102 to the network device, for example, to a policy generation module 106 of the network device.

The network device includes a device-level energy-saving control unit. The device-level energy-saving control unit is used for sensing of internal information of the network device, prediction of energy-saving risks, prediction of service loads, and decision-making of energy-saving operations. Continuing to refer to FIG. 5, the device-level energy-saving control unit includes an information sensing module 104, a device-level risk prediction module 105, a policy generation module 106, an action decision-making module 107, an action module 108, and an execution module 109.

Herein, the information sensing 104 is configured to acquire the operation state of the network device; the device-level risk prediction module 105 is configured to predict the load information of the board in the network device included in the operation state of the network device by using a time sequence prediction algorithm, to obtain the second energy-saving risk value of the network device. The policy generation module 106 is configured to perform weighted calculation based on the first energy-saving risk value and the second energy-saving risk value to obtain a third energy-saving risk value, perform bucket calculation on the third energy-saving risk value to obtain an energy-saving risk level of the network device, design multi-level energy-saving policies according to hierarchical adjustment of the protection policies and hardware adjustment granularities, and select, according to the energy-saving risk level, an energy-saving policy adapted to the energy-saving risk level from a policy warehouse. The action decision-making module 107 is configured to calculate idle device resources according to the load prediction information, the operation state information, and the energy-saving policy of the network device, and generate energy-saving information or stop energy-saving information. The action module 108 is configured to convert the energy-saving information or the stop energy-saving information generated by the action decision-making module 107 into corresponding communication information (i.e., an energy-saving instruction or a stop energy-saving instruction), and forward the communication information to execution modules such as a device electromechanical management module and a driver management module. The execution module 109 is configured to receive the communication information, and control corresponding components to perform the energy-saving operation such as power-off or sleep.

The foregoing mainly introduces the solutions provided in the embodiments of the present disclosure from the perspective of methods. In order to implement the above functions, they include at least one of hardware structures or software modules corresponding to executing the respective functions. Those skilled in the art should easily realize that the embodiments of the present disclosure are able to be implemented in the form of hardware or a combination of hardware and computer software in combination with units and steps of algorithms described in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The embodiments of the present disclosure may divide the management device and the network device into functional modules according to the above method examples. For example, division of various functional modules may be performed corresponding to various functions, or two or more functions may be integrated into one processing module. The above-mentioned integrated module may be implemented in the form of hardware, or may be implemented in the form of software functional module. It should be noted that the division of the modules in the present disclosure is illustrated, which is only a logical functional division, and there may be other division manners in an actual implementation.

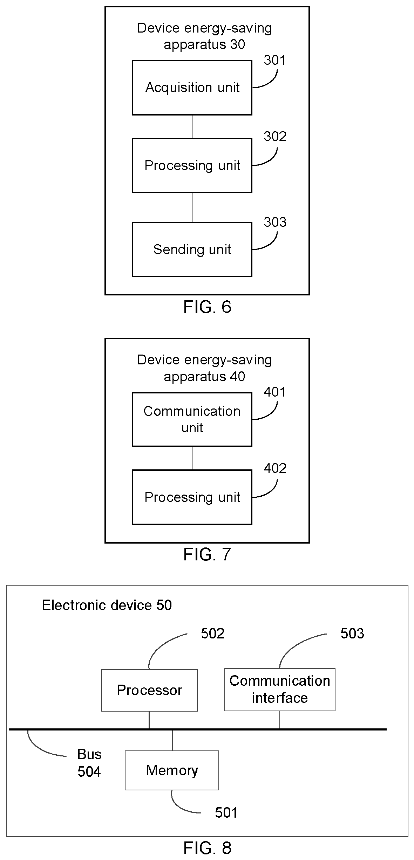

FIG. 6 is a block diagram of a device energy-saving apparatus according to some embodiments of the present disclosure. As shown in FIG. 6, the device energy-saving apparatus 30 may include an acquisition unit 301, a processing unit 302, and a sending unit 303.

The device energy-saving apparatus 30 may be the above management device or a chip in the management device. In a case where the device energy-saving apparatus 30 is configured to implement the functions of the management device in the above embodiments, the various units are configured to implement the following functions.

The acquisition unit 301 is configured to acquire a network state graph sequence, where the network state graph sequence includes network state graphs of the network device at a plurality of moments, the network state graphs at the plurality of moments are used to characterize network topology structures of the network device at the plurality of moments, where the plurality of moments include a current moment.

The processing unit 302 is configured to determine a first energy-saving risk value of the network device based on the network state graph sequence, where the first energy-saving risk value is used to characterize a risk degree of performing energy-saving on the network device under a network topology structure at the current moment.

The sending unit 303 is configured to send the first energy-saving risk value to the network device.

In some embodiments, the acquisition unit 301 is configured to: acquire network topology information of the network device at each moment of the plurality of moments; obtain a network state graph of the network device at each moment of the plurality of moments based on the network topology information of the network device at the each moment of the plurality of moments; and obtain the network state graph sequence based on the network state graph of the network device at the each moment of the plurality of moments.

In some embodiments, the network topology information includes at least one of: a network level of the network device, a network topology structure of the network device, configuration information of the network device, or a link load condition.

In some embodiments, the processing unit 302 is configured to input the network state graph sequence into an energy-saving risk prediction model based on a graph neural network algorithm, to obtain the first energy-saving risk value of the network device.

FIG. 7 is a block diagram of another device energy-saving apparatus according to some embodiments of the present disclosure. As shown in FIG. 7, the device energy-saving apparatus 40 may include a communication unit 401 and a processing unit 402.

The device energy-saving apparatus 40 may be the above network device or a chip in the network device. In a case where the device energy-saving apparatus 40 is configured to implement the functions of the network device in the above embodiments, the various units are configured to implement the following functions.

The communication unit 401 is configured to receive a first energy-saving risk value sent from the management device, where the first energy-saving risk value is used to characterize a risk degree of performing energy-saving on the network device under a network topology structure at a current moment.

The processing unit 402 is configured to determine an energy-saving policy based on an operation state of the network device and the first energy-saving risk value.
the processing unit 402 is further configured to perform an energy-saving operation on the network device based on the energy-saving policy and load prediction information of the network device.

In some embodiments, the processing unit 402 is configured to: obtain a second energy-saving risk value of the network device based on the operation state of the network device, where the second energy-saving risk value is used to characterize a risk degree of performing energy-saving on the network device under an operation state at the current moment; and determine the energy-saving policy based on the second energy-saving risk value and the first energy-saving risk value.

In some embodiments, the operation state of the network device at least includes load information of a single board in the network device. The processing unit 402 is further configured to: obtain an energy-saving risk value of the single board in the network device according to the load information of the board in the network device and a time sequence prediction algorithm; and obtain the second energy-saving risk value of the network device based on the energy-saving risk value of the single board in the network device.

In some embodiments, the network device includes a plurality of boards, and the processing unit 402 is further configured to determine a target board from the plurality of boards, and determining an energy-saving risk value of the target board as the second energy-saving risk value of the network device; where the target board is a board with a maximum energy-saving risk value among the plurality of boards.

In some embodiments, the processing unit 402 is further configured to: perform weighted calculation on the second energy-saving risk value and the first energy-saving risk value to obtain a third energy-saving risk value; obtain an energy-saving risk level of the network device based on the third energy-saving risk value and a first correspondence; where the first correspondence is used to characterize a correspondence between an energy-saving risk value and an energy-saving risk level; and determine the energy-saving policy according to the energy-saving risk level and a second correspondence; where the second correspondence is used to characterize a correspondence between the energy-saving risk level and the energy-saving policy.

It should be noted that the units in FIG. 6 and FIG. 7 may also be referred to as modules. For example, the sending unit may be referred to as a sending module. In addition, in the embodiments shown in FIG. 6 and FIG. 7, the names of the various units may not be the names shown in the figures. For example, the acquisition unit may also be referred to as a communication unit, and the sending unit may also be referred to as a communication unit.

If the various units in FIG. 6 and FIG. 7 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related arts, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a Random-access memory (RAM), a magnetic disk, or an optical disk.

In a case where the above device energy-saving apparatus 30 or the device energy-saving apparatus 40 implements the functions of the above integrated modules in the form of hardware, a block diagram of an electronic device is provided in the embodiments of the present disclosure. As shown in FIG. 8, the electronic device 50 includes: a processor 502, a communication interface 503, and a bus 504. In some embodiments, the electronic device 50 may further include a memory 501.

The processor 502 may be various exemplary logical blocks, modules and circuits for implementing or performing what is described in combination with disclosed contents of the present disclosure. The processor 502 may be a central processor, a general-purpose processor, a digital signal processor, an application specific integrated circuit, a field programmable gate array, or other programmable logic component, a transistor logic component, a hardware assembly, or any combination thereof. The processor 502 may implement or execute various illustrative logical blocks, modules and circuits described in conjunction with the disclosed contents the present disclosure. The processor 502 may also be a combination capable of implementing computing functions, for example, a combination of one or more microprocessors, or a combination of a digital signal processor (DSP) and a microprocessor.

The communication interface 503 is configured to connect to other devices through a communication network. The communication network may be the Ethernet, a radio access network, a wireless local area network (WLAN), or the like.

The memory 501 may be a read-only memory (ROM) or other types of static storage devices that can store static information and instructions, a random access memory (RAM), or other types of dynamic storage devices that are capable of storing information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

In some embodiments, the memory 501 may exist independently from the processor 502, and the memory 501 may be connected to the processor 502 through the bus 504 for storing instructions or program codes. In a case where the processor 502 invokes and executes instructions or program codes stored in the memory 501, the device energy-saving method provided in the embodiments of the present disclosure may be implemented.

In other embodiments, the memory 501 may be integrated with the processor 502.

The bus 504 may be an extended industry standard architecture (EISA) bus, or the like. The bus 504 may be classified as an address bus, a data bus, or a control bus, or the like. For ease of representation, only one bold line is used in FIG. 8 for representing the bus, but it does not mean that there is only one bus or one type of bus.

Through the description of the above implementations, those of ordinary skill in the art may clearly understand that for the convenience and simplicity of the description, the division of the above functional modules is given merely as an example. In practical applications, the above functions can be allocated to different functional modules according to requirements, that is, the internal structure of the base station or terminal may be divided into different functional modules to complete all or part of the functions described above.

A computer-readable storage medium (for example, a non-transitory computer-readable storage medium) is provided in the embodiments of the present disclosure. All or part of the processes in the above method embodiments may be implemented by related information of an information hardware indicated by computer instructions. The programs may be stored in the above-mentioned computer-readable storage medium, and upon being executed, the programs may include the processes as described in the above method embodiments. The computer-readable storage medium may be an internal storage in any of the aforementioned embodiments. The computer-readable storage medium may also be an external storage device of the management device or the network device, such as a plug-in hard disk, a smart media card (SMC), a secure digital (SD) card, a flash card, etc., provided on the management device or network device. In some embodiments, the above computer-readable storage medium may further include both an internal storage unit of the above management device or network device and an external storage device. The above computer-readable storage medium is used to store the above computer programs and other programs and data required by the above management device or network device. The above-mentioned computer-readable storage medium may further be configured to temporarily store data that has been output or is to be output.

A computer program product is further provided in the embodiments of the present disclosure. The computer product includes computer programs that, upon being run on a computer, enable the computer to perform any one of the device energy-saving methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "a" or "an/one/single" does not exclude the case of a plurality. A single processor or other units may implement couples of functions listed in the claims. Some measures are recorded in different dependent claims, but it does not mean that these measures cannot be combined to produce good effects.

Although the present disclosure is described in conjunction with example features and embodiments thereof, obviously, various modifications and combinations can be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations in the present disclosure fall within the scope of the claims and their equivalent technologies of the present disclosure, then the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A device energy-saving method, **characterized by** being applied to a management device, the management device being connected to a network device, the method comprising:
acquiring a network state graph sequence, wherein the network state graph sequence comprises network state graphs of the network device at a plurality of moments, the network state graphs at the plurality of moments are used to characterize network topology structures of the network device at the plurality of moments, wherein the plurality of moments comprise a current moment;
determining a first energy-saving risk value of the network device based on the network state graph sequence, wherein the first energy-saving risk value is used to characterize a risk degree of performing energy-saving on the network device under a network topology structure at the current moment; and
sending the first energy-saving risk value to the network device.

2. The method according to claim 1, wherein acquiring the network state graph sequence comprises:
acquiring network topology information of the network device at each moment of the plurality of moments;
obtaining a network state graph of the network device at each moment of the plurality of moments based on the network topology information of the network device at the each moment of the plurality of moments; and
obtaining the network state graph sequence based on the network state graph of the network device at the each moment of the plurality of moments.

3. The method according to claim 1 or 2, wherein network topology information comprises at least one of:
a network level of the network device, a network topology structure of the network device, configuration information of the network device, or a link load condition.

4. The method according to claim 1, wherein determining the first energy-saving risk value of the network device based on the network state graph sequence comprises:
inputting the network state graph sequence into an energy-saving risk prediction model based on a graph neural network algorithm, to obtain the first energy-saving risk value of the network device.

5. A device energy-saving method, **characterized by** being applied to a network device, the network device being connected to a management device, the method comprising:
receiving a first energy-saving risk value sent from the management device, wherein the first energy-saving risk value is used to characterize a risk degree of performing energy-saving on the network device under a network topology structure at a current moment;
determining an energy-saving policy based on an operation state of the network device and the first energy-saving risk value; and
performing an energy-saving operation on the network device based on the energy-saving policy and load prediction information of the network device.

6. The method according to claim 5, wherein determining the energy-saving policy based on the operation state of the network device and the first energy-saving risk value comprises:
obtaining a second energy-saving risk value of the network device based on the operation state of the network device, wherein the second energy-saving risk value is used to characterize a risk degree of performing energy-saving on the network device under an operation state at the current moment; and
determining the energy-saving policy based on the second energy-saving risk value and the first energy-saving risk value.

7. The method according to claim 6, wherein the operation state of the network device at least comprises load information of a single board in the network device; and obtaining the second energy-saving risk value of the network device based on the operation state of the network device comprises:
obtaining an energy-saving risk value of the single board in the network device according to the load information of the board in the network device and a time sequence prediction algorithm; and
obtaining the second energy-saving risk value of the network device based on the energy-saving risk value of the single board in the network device.

8. The method according to claim 7, wherein the network device comprises a plurality of boards, and obtaining the second energy-saving risk value of the network device based on the energy-saving risk value of the single board in the network device comprises:
determining a target board from the plurality of boards, and determining an energy-saving risk value of the target board as the second energy-saving risk value of the network device; wherein the target board is a board with a maximum energy-saving risk value among the plurality of boards.

9. The method according to claim 6, wherein determining the energy-saving policy based on the second energy-saving risk value and the first energy-saving risk value comprises:
performing weighted calculation on the second energy-saving risk value and the first energy-saving risk value to obtain a third energy-saving risk value;
obtaining an energy-saving risk level of the network device based on the third energy-saving risk value and a first correspondence; wherein the first correspondence is used to characterize a correspondence between an energy-saving risk value and an energy-saving risk level; and
determining the energy-saving policy according to the energy-saving risk level and a second correspondence; wherein the second correspondence is used to characterize a correspondence between the energy-saving risk level and the energy-saving policy.

10. A device energy-saving system, **characterized by** comprising a management device and a network device, the management device being connected to the network device;
the management device is configured to perform the method according to any one of claims 1 to 4; and
the network device is configured to perform the method according to any one of claims 5 to 9.

11. An electronic device, **characterized by** comprising: a memory and one or more processors; wherein
the memory stores instructions executable for the one or more processors;
the one or more processors is configured to, upon executing the instructions, enable the electronic device to implement the method according to any one of claims 1 to 4, or the method according to any one of claims 5 to 9.

12. A computer-readable storage medium, **characterized in that** the computer-readable storage medium comprises computer instructions, and upon the computer instructions running on a computer, the computer is caused to perform the method according to any one of claims 1 to 4, or the method according to any one of claims 5 to 9.
